# EUROPEAN PATENT APPLICATION

(11) **EP 2 327 866 A2**
(43) Date of publication of application: **01.06.2011**
(21) Application number: 10192464.5
(22) Date of filing: 24.11.2010
(51) Int. Cl.: F02C 5/00

(54) **Pulse detonation combustor**

(30) Priority: 30.11.2009 US 627942
(71) Applicant: General Electric Company, Schenectady, NY 12345 (US)
(72) Inventor: Kenyon, Ross Hartley, Niskayuna, NY 12309 (US); Hofer, Douglas Carl, Niskayuna, NY 12309 (US); Rasheed, Adam, Niskayuna, NY 12309 (US); Pombles, Mark, Cincinnati, OH 45246 (US); Joshi, Narendra Digamber, Niskayuna, NY 12309 (US)
(74) Representative: Gray, Thomas

(57) **Abstract**

A pulse detonation combustor (16) includes a gas discharge annulus (65) including multiple nozzles (40) engaged with one another via mating surfaces to support the gas discharge annulus (65) in a circumferential direction. The pulse detonation combustor (16) also includes multiple pulse detonation tubes (36) extending to the nozzles (40)

## Description

### BACKGROUND OF THE INVENTION

The subject matter disclosed herein relates to a pulse detonation combustor, and, more specifically, to an arrangement of pulse detonation tubes within a pulse detonation combustor.

Gas turbine engines include one or more combustors, which receive and combust compressed air and fuel to produce hot combustion gases. Certain turbine engine concepts employ a pulse detonation combustor which includes one or more pulse detonation tubes configured to combust the fuel-air mixture using a detonation reaction. Within a pulse detonation tube, the combustion reaction is driven by a detonation wave that moves at supersonic speed, thereby increasing the efficiency of the combustion process. Specifically, air and fuel are typically injected into the pulse detonation tube in discrete pulses. The fuel-air mixture is then detonated by an ignition source, thereby establishing a detonation wave that propagates through the tube at a supersonic velocity. The detonation process produces pressurized exhaust gas within the pulse detonation tube that ultimately drives a turbine to rotate.

Unfortunately, due to the high temperatures and pressures associated with detonation reactions, longevity of the pulse detonation tubes and associated components may be significantly limited. Specifically, nozzles which direct exhaust gas from the pulse detonation tubes to the turbine inlet may experience high thermal stress, thereby limiting the useful life of such nozzles. In addition, thermal expansion of the pulse detonation tubes may alter an entrance angle of exhaust gas into the turbine, thereby decreasing efficiency of the turbine engine.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a pulse detonation combustor includes a gas discharge annulus including multiple nozzles engaged with one another via mating surfaces to support the gas discharge annulus in a circumferential direction. The pulse detonation combustor also includes multiple pulse detonation tubes extending to the nozzles.

In a second embodiment, a turbine system includes a pulse detonation combustor including multiple nozzles each having a nozzle exit orifice and a nozzle inlet. The nozzle exit orifices engage with one another via mating surfaces to form a gas discharge annulus. The pulse detonation combustor also includes multiple pulse detonation tubes each coupled to a respective nozzle inlet.

In a third embodiment, an inter-nozzle cooling system includes multiple nozzle exit orifices engaged with one another via mating surfaces to form a gas discharge annulus of a pulse detonation combustor. At least one mating surface of each nozzle exit orifice includes one or more cooling slots in fluid communication with a cooling manifold.

In a fourth embodiment, a circumferential cooling system includes multiple nozzle exit orifices engaged with one another via mating surfaces to form a gas discharge annulus of a pulse detonation combustor. The circumferential cooling system also includes a frame coupled to the gas discharge annulus. The frame includes a circumferential cooling manifold and one or more cooling slots extending from the circumferential cooling manifold toward the gas discharge annulus.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of a turbine system having a pulse detonation combustor including multiple nozzles configured to interlock to form a gas discharge annulus in accordance with certain embodiments of the present disclosure;
FIG. 2 is a partial cross-sectional side view of the pulse detonation combustor, as shown in FIG. 1, in accordance with certain embodiments of the present disclosure;
FIG. 3 is a front view of the pulse detonation combustor of FIG. 1, showing a nozzle configuration in accordance with certain embodiments of the present disclosure;
FIG. 4 is a side view of the pulse detonation combustor, as shown in FIG. 3, in accordance with certain embodiments of the present disclosure;
FIG. 5 is a perspective view of the pulse detonation combustor, as shown in FIG. 3, including interlocking nozzles forming a gas discharge annulus in accordance with certain embodiments of the present disclosure;
FIG. 6 is a perspective view of two adjoining nozzles, as shown in FIG. 5, in accordance with certain embodiments of the present disclosure;
FIG. 7 is a perspective view of adjacent nozzle exit orifices, as shown in FIG. 5, illustrating an inter-nozzle cooling configuration in accordance with certain embodiments of the present disclosure;
FIG. 8 is a cross-sectional side view of a nozzle illustrating a circumferential nozzle cooling configuration in accordance with certain embodiments of the present disclosure;
FIG. 9 is a perspective view of the circumferential cooling configuration, as shown in FIG. 8, in accordance with certain embodiments of the present disclosure;
FIG. 10 is a sectional view of adjoining nozzles, taken along line 10-10 of FIG. 6, having common surfaces at the exit orifices in accordance with certain embodiments of the present disclosure; and
FIG. 11 is a cross-sectional view of a pulse detonation tube and nozzle assembly having thermal expansion joints in accordance with certain embodiments of the present disclosure.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the present disclosure may increase the longevity of pulse detonation nozzles by providing structural support and cooling systems for the nozzles. Specifically, in certain embodiments, a pulse detonation combustor includes multiple nozzles each having a nozzle exit orifice and a nozzle inlet. A pulse detonation tube is coupled to each nozzle inlet, and configured to flow exhaust gas from a detonation reaction through the nozzle. Furthermore, the nozzle exit orifices engage with one another via mating surfaces to form a gas discharge annulus. In this configuration, thermal loads applied to each nozzle exit orifice by the hot exhaust gas are distributed throughout the combined structure of the annulus. In other words, the gas discharge annulus supports the individual nozzle exit orifices, thereby increasing the longevity of the nozzles.

In further embodiments, the nozzles are oriented substantially tangent to the gas discharge annulus. The nozzles are also angled relative to a longitudinal centerline of the pulse detonation combustor. In certain configurations, the orientation of the nozzles directs exhaust gas into the turbine at an angle configured to obviate first stage nozzles within the turbine. Because first stage turbine nozzles experience high stagnation temperatures, omission of these components may increase the longevity of the turbine, decrease turbine weight, and reduce turbine construction and maintenance costs.

Certain embodiments may also include cooling systems configured to provide a cooling flow to the nozzle exit orifices, thereby reducing orifice temperature and thermal stress. Specifically, an inter-nozzle cooling system may include multiple axial cooling slots within at least one mating surface of each nozzle exit orifice. These axial cooling slots may be in fluid communication with a radial cooling manifold, and extend from the radial cooling manifold to a downstream surface of each nozzle exit orifice. Such a cooling system may significantly reduce the temperature of each circumferential side of the nozzle exit orifices. In further embodiments, a circumferential cooling system may be employed which includes a frame coupled to the gas discharge annulus. The frame includes a circumferential cooling manifold and multiple radial cooling slots extending from the circumferential cooling manifold toward the gas discharge annulus. Certain configurations may include a frame positioned adjacent to an inner circumferential surface of the gas discharge annulus and/or a frame positioned adjacent to an outer circumferential surface. Such configurations may cool the inner and/or outer circumferential surfaces of each nozzle exit orifice, thereby reducing thermal stress within the nozzles.

In yet further embodiments, each nozzle exit orifice may include inner and outer circumferential flange segments disposed on opposite radial sides of each nozzle exit orifice. These flange segments are configured to form inner and outer circumferential flanges when the nozzle exit orifices are assembled into the gas discharge annulus. The flanges may be secured to inner and outer frame members that are coupled to the turbine. In this configuration, the orientation of the nozzle exit orifices may remain substantially constant with respect to the turbine despite thermal expansion of each nozzle and/or pulse detonation tube, thereby maintaining efficient operation of the turbine system.

As used herein, a pulse detonation tube is understood to mean any device or system that produces both a pressure rise and velocity increase from a series of repeated detonations or quasi-detonations within the tube. A "quasi-detonation" is a supersonic turbulent combustion process that produces a pressure rise and velocity increase higher than the pressure rise and velocity increase produced by a deflagration wave. Embodiments of pulse detonation tubes include a means of igniting a fuel/oxidizer mixture, for example a fuel/air mixture, and a detonation chamber, in which pressure wave fronts initiated by the ignition process coalesce to produce a detonation wave. Each detonation or quasi-detonation is initiated either by external ignition, such as spark discharge or laser pulse, or by gas dynamic processes, such as shock focusing, auto ignition or by another detonation (i.e. cross-fire).

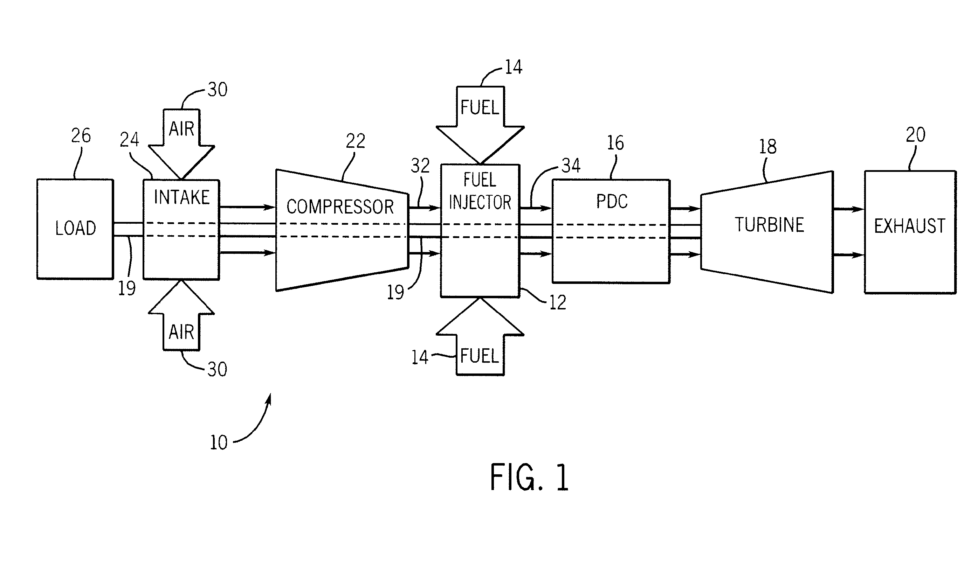

Turning now to the drawings and referring first to FIG. 1, a block diagram of an embodiment of a gas turbine system 10 is illustrated. The turbine system 10 includes a fuel injector 12, a fuel supply 14, and a pulse detonation combustor (PDC) 16. As illustrated, the fuel supply 14 routes a liquid fuel and/or gaseous fuel, such as natural gas, to the turbine system 10 through the fuel injector 12 into the PDC 16. As discussed below, the fuel injector 12 is configured to inject and mix the fuel with compressed air. The PDC 16 ignites and combusts the fuel-air mixture, and then passes hot pressurized exhaust gas into a turbine 18. The exhaust gas passes through turbine blades in the turbine 18, thereby driving the turbine 18 to rotate. Coupling between blades in the turbine 18 and a shaft 19 will cause the rotation of the shaft 19, which is also coupled to several components throughout the turbine system 10, as illustrated. Eventually, the exhaust of the combustion process may exit the turbine system 10 via an exhaust outlet 20.

In an embodiment of the turbine system 10, compressor blades are included as components of a compressor 22. Blades within the compressor 22 may be coupled to the shaft 19, and will rotate as the shaft 19 is driven to rotate by the turbine 18. The compressor 22 may intake air to the turbine system 10 via an air intake 24. Further, the shaft 19 may be coupled to a load 26, which may be powered via rotation of the shaft 19. As will be appreciated, the load 26 may be any suitable device that may use the power of the rotational output of the turbine system 10, such as an electrical generator or an external mechanical load. For example, the load 26 may include an electrical generator, a propeller of an airplane, and so forth. The air intake 24 draws air 30 into the turbine system 10 via a suitable mechanism, such as a cold air intake. The air 30 then flows through blades of the compressor 22, which provides compressed air 32 to the PDC 16. In particular, the fuel injector 12 may inject the compressed air 32 and fuel 14, as a fuel-air mixture 34, into the PDC 16. Alternatively, the compressed air 32 and fuel 14 may be injected directly into the PDC 16 for mixing and combustion.

As discussed in detail below, the present embodiment includes multiple pulse detonation tubes within the PDC 16. The tubes are configured to receive compressed air 32 and fuel 14 in discrete pulses. After a pulse detonation tube has been loaded with a fuel-air mixture, the mixture is detonated by an ignition source, thereby establishing a detonation wave that propagates through the tube at a supersonic velocity. The detonation process produces pressurized exhaust gas within the pulse detonation tube that ultimately drives the turbine 18 to rotate. In certain embodiments, each pulse detonation tube is coupled to the turbine 18 via a nozzle including a nozzle exit orifice. The nozzle exit orifices engage with one another via mating surfaces to form a gas discharge annulus. This configuration provides mutual support for each nozzle exit orifice, thereby facilitating resistance to thermal loads associated with the hot exhaust gas. Further embodiments may employ inter-nozzle and/or circumferential cooling systems to reduce the temperature of the nozzle exit orifices, thereby increasing longevity of the nozzles. While the pulse detonation tubes are described with reference to a PDC 16, it should be appreciated that the presently disclosed embodiments may be utilized for other applications, such as "pure" pulse detonation engines in which the exhaust is directed through a converging-diverging nozzle directly to ambient to produce raw thrust, as well as other applications employing pulse detonation tubes.

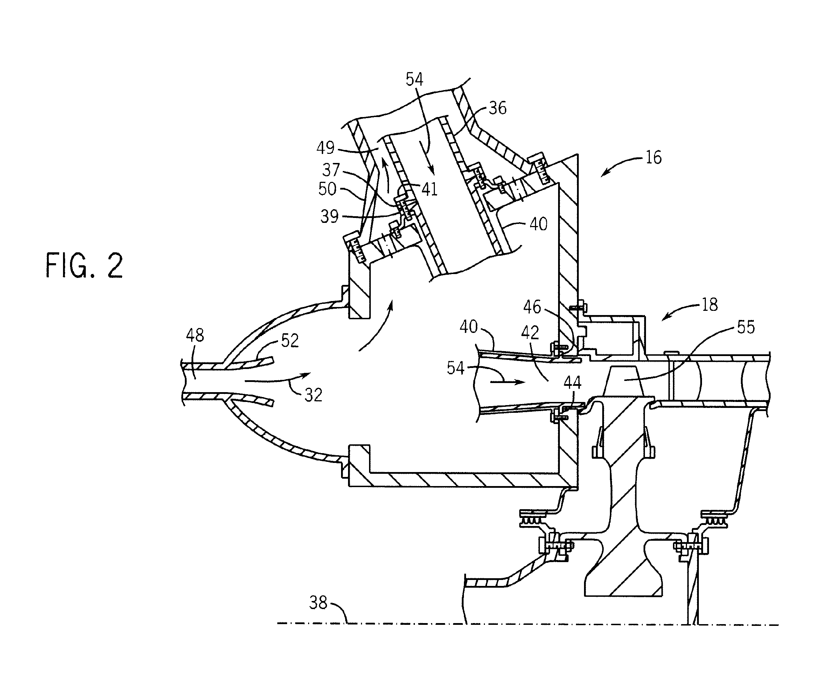

FIG. 2 is a partial cross-sectional side view of the PDC 16 that may be used in the turbine system 10 of FIG. 1. As previously discussed, the PDC 16 includes multiple pulse detonation tubes (PDTs) 36. While only one PDT 36 is illustrated, it will be appreciated that multiple PDTs 36 may be circumferentially positioned about a centerline 38. Generally, PDCs 16 include PDTs 36 oriented axially and radially away from the turbine 18, thus increasing the length of the turbine system 10 compared to traditional configurations employing deflagration-type combustors. As discussed in detail below, a circumferential arrangement of PDTs 36 may decrease the overall length of the turbine system 10 to a length more commensurate in scope with traditional turbine systems. While a PDC 16 is employed in the present configuration, it should be noted that alternative embodiments may employ a combustor including both PDTs 36 and traditional deflagration-type combustors.

As illustrated, each PDT 36 is coupled to a respective nozzle 40. In alternative embodiments, multiple PDTs 36 may be coupled to each nozzle 40. In the present embodiment, each PDT 36 includes a flange 37 configured to mate with a corresponding flange 39 of the nozzle 40. As illustrated, fasteners 41 serve to secure the PDT flange 37 to the nozzle flange 39. Further embodiments may employ alternative conventional means of attaching the PDT 36 to the nozzle 40 (e.g., welded connection). Additionally, the nozzle 40 may be integral with the PDT 36. That is, the PDT 36 and nozzle 40 may be combined into a single structure. As will be described in greater detail below, each nozzle 40 comprises a nozzle exit orifice 42 having an inner flanged segment 44 and an outer flanged segment 46. In certain embodiments, the nozzle exit orifices 42 contain unique features which allow them to be interlocked, thereby establishing a combined gas discharge annulus which provides mutual support for the individual nozzles 40, as well as a surface for mounting to a frame.

In operation, pressurized air 32 enters the PDC 16 through a compressor outlet 48, including a diffuser 52 that directs air flow into the PDC 16. Specifically, the diffuser 52 converts the dynamic head from high-velocity compressor air into a pressure head suitable for combustion (i.e., decreases flow velocity and increases flow pressure). In the present embodiment, the flow is redirected such that turbulence is substantially reduced.

The pressurized air 32 is then directed into a flow path 49 between a PDC casing 50 and the PDT 36. As previously discussed, detonation reactions generate significant heat output. Because the pressured air 32 is cooler than the detonation reaction within the PDT 36, air flow along the outer wall of the PDT 36 transfers heat from the PDT 36 to the pressurized air 32. This configuration both cools the PDT 36 during operation, and increases the temperature of air entering the PDT 36.

The pressured air 32 ultimately flows to a distal end (not shown) of the PDT 36 prior to entering an interior of the PDT 36. As the pressurized air 32 reaches the distal end, an air valve periodically opens to emanate air pulses into the PDT 36. In addition, the fuel injector 12 injects fuel into the air stream, either prior to entering the PDT 36, or within the PDT 36, thereby establishing a fuel-air mixture 34 suitable for detonation. Within the PDT 36, the fuel-air mixture 34 is detonated by an ignition source, establishing a deflagration to detonation transition (DDT) which forms a detonation wave. The detonation wave propagates through the fuel-air mixture toward the nozzle 40 at a supersonic velocity. The detonation wave induces a combustion reaction between the fuel and air, thereby generating heat and forming exhaust products 54 upstream of the wave. As the detonation wave propagates through the fuel-air mixture, the interior of the PDT 36 becomes pressurized due to temporary confinement of the expanding exhaust products 54 within the PDT 36. Specifically, the detonation wave heats the exhaust products 54 faster than the expanding gas can exit the nozzle 40, thereby increasing pressure within the PDT 36. After the detonation wave has substantially reacted the fuel and air within the PDT 36, the pressurized exhaust products 54 are expelled through the nozzle 40 into a turbine rotor 55, thereby driving the turbine 18 to rotate.

As will be described in greater detail below, the nozzle 40 converges in a cross-sectional area perpendicular to a direction of gas flow through the nozzle to maintain a choked flow of the exhaust products 54 from the PDT 36 to the nozzle exit orifice 42. For example, in certain configurations, the cross-sectional area of the PDT 36 may be approximately four times greater than a cross-sectional area of the nozzle exit orifice 42. In addition, each nozzle may converge in cross-sectional area from the nozzle inlet to a throat, and diverge in cross-sectional area from the throat to the nozzle exit orifice 42. Furthermore, the nozzle 40 may transition from a substantially circular cross-section of the PDT 36 to a shape having substantially flat circumferential sides at the nozzle exit orifice 42. The substantially flat circumferential sides may enable the nozzle exit orifices 42 to interlock, thereby forming a gas discharge annulus which supports the nozzle exit orifices 42 during operation. As will also be described, the PDT 36 and nozzle 40 may be oriented at an angle with respect to the turbine system centerline 38 that is at or near a turbine entrance angle. The exhaust products 54 are thereby directed to the turbine 18 at a suitable orientation to obviate first stage turbine nozzles.

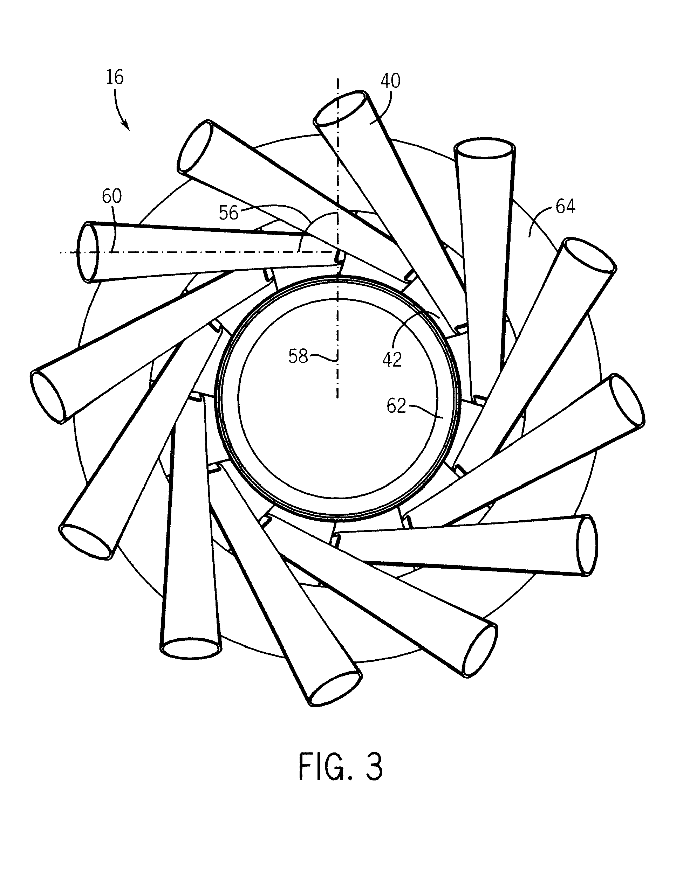

FIG. 3 is a front view of an exemplary nozzle configuration, looking generally from the compressor 22 toward the turbine 18. As illustrated, the PDTs 36 have been removed for clarity. As discussed in detail below, the nozzle exit orifices 42 are designed to tessellate and interlock with adjoining nozzle exit orifices 42 when assembled into a gas discharge annulus. This configuration may provide structural support for each nozzle exit orifice 42, thereby protecting the orifices 42 from high thermal and mechanical stresses associated with the detonation process.

In the present configuration, the nozzles 40 are oriented at an angle 56 with respect to a radial axis 58 extending from the turbine system centerline 38. Specifically, the angle 56 defmes the angular orientation of a nozzle centerline 60 relative to the radial axis 58. In the present configuration, the angle 56 is approximately 90 degrees. In other words, the nozzles 40 are oriented substantially tangent to the gas discharge annulus formed by the assembly of nozzle exit orifices 42. In alternative embodiments, the nozzles 40 may be oriented at other suitable angles 56 relative to the radial axis 58. For example, angle 56 may be approximately between 0 to 180, 30 to 150, 60 to 120, 60 to 90, or about 75 to 90 degrees. The orientation of the nozzles 40 imparts a circumferential velocity component onto the flow of exhaust products into the turbine 18. As discussed in detail below, the nozzles 40 may be oriented at an angle configured to obviate first stage turbine nozzles, thereby decreasing the weight and complexity of the turbine 18.

Furthermore, while twelve nozzles 40 are coupled to the PDC 16 in the depicted embodiment, alternative embodiments may employ more or fewer nozzles 40. For example, certain PDC configurations may include more than 1, 2, 4, 6, 8, 10, 12, 14, 16, 18, 20, or more nozzles 40 and associated PDTs 36. As discussed in detail below, each nozzle exit orifice 42 includes the inner flange segment 44 and the outer flange segment 46 which, when assembled, form inner and outer flanges about the gas discharge annulus. The inner flange provides a surface against which the inner frame member 62 may be mounted, and the outer flange provides a surface against which an outer frame member 64 may be secured. Both the inner and outer frame members 62 and 64 are secured to the turbine 18. As discussed in detail below, the inner and outer frame members 62 and 64 secure the nozzles 40 to the PDC 16 such that thermal expansion of the nozzles 40 and/or the PDTs 36 does not significantly alter the position and orientation of the nozzle exit orifices 42 relative to the turbine 18. In this configuration, nozzle exit orifices 42 may flow exhaust products 54 into the turbine 18 at an orientation configured to obviate first stage turbine nozzles.

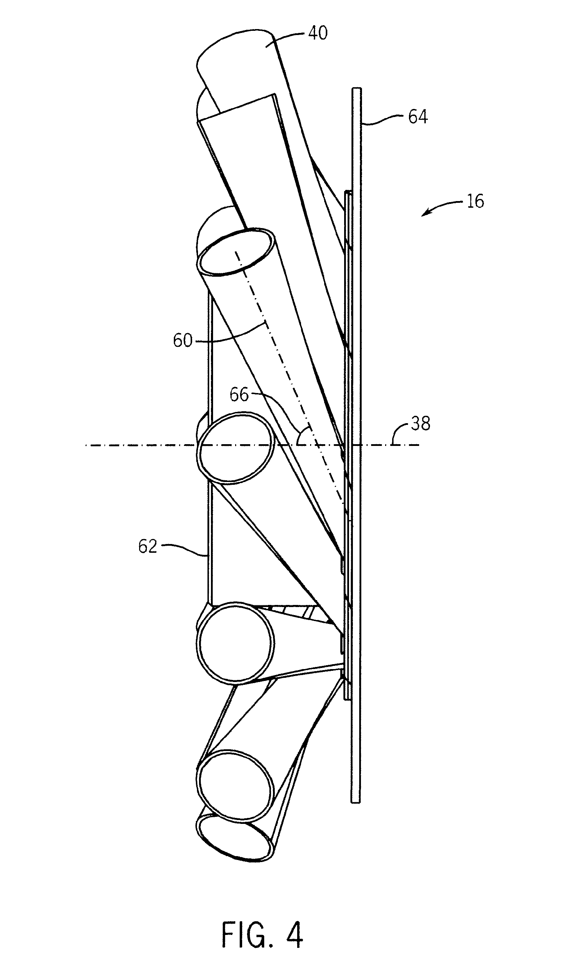

FIG. 4 is a side view of the PDC 16 of FIG. 3, in which the compressor 22 would be located to the left of the PDC 16 and the turbine 18 would be located to the right. As illustrated, the nozzles 40 are oriented at an angle 66 relative to the centerline 38 of the turbine system 10. In certain configurations, the angle 66 between the turbine system centerline 38 and the nozzle centerline 60 may be approximately between 30 to 80, 50 to 80, 60 to 70, or about 70 degrees. As will be appreciated, traditional first stage turbine nozzles may be the hottest components of a turbine system because they are directly in the flow path of the exhaust products 54 and include stagnation points. By orienting the nozzles 40 at an angle 66 equal to the turbine entrance angle, the traditional first stage turbine nozzles may be omitted. Specifically, orienting the nozzles 40 at the angle 56 and the angle 66 establishes a flow into the turbine rotor commensurate to the flow downstream from the first stage turbine nozzles (i.e., a flow having axial and circumferential components), thereby obviating the traditional first stage nozzles. In certain embodiments, the PDTs 36 may be oriented at a substantially similar angle to the nozzles 40. Alternative embodiments may employ PDTs 36 oriented at a different angle than the nozzles 40. In such configurations, the nozzles 40 may direct the exhaust products 54 into the turbine 18 at a desired angle, while facilitating arrangement of the PDTs 36 to reduce turbine system length.

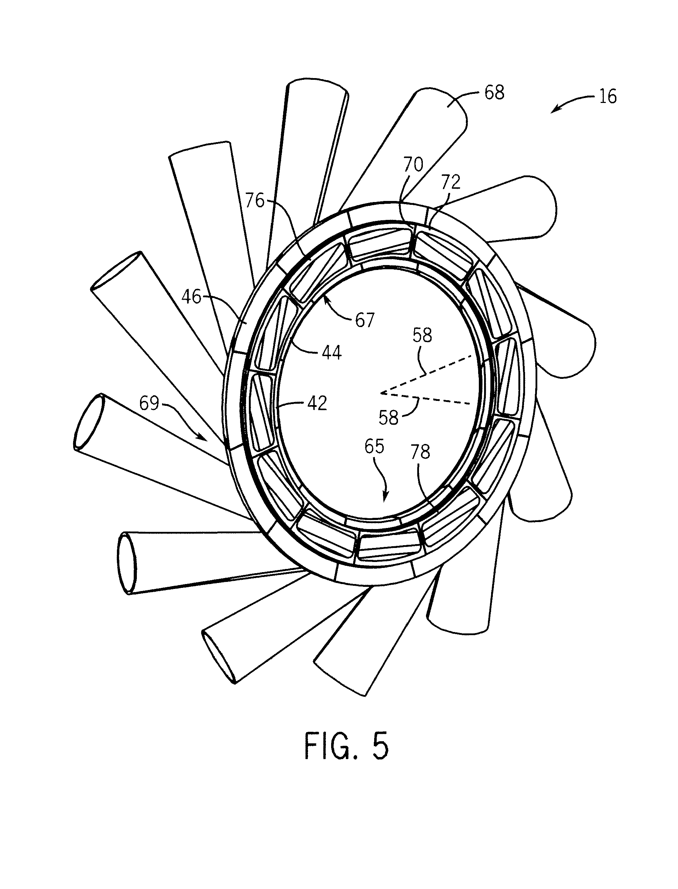

FIG. 5 is a perspective view of the PDC 16, including interlocking nozzles 40 forming a gas discharge annulus 65. Portions of the outer frame member 64 and the entire inner frame member 62 have been removed for clarity. FIG. 5 also shows the pulse detonation tube casings 50 extending radially outward from the remaining portion of the outer frame member 64. As previously discussed, each nozzle exit orifice 42 includes the inner flange segment 44 and the outer flange segment 46. As illustrated, when the nozzle exit orifices 42 are assembled into the gas discharge annulus 65, the inner flange segments 44 and the outer flange segments 46 form an inner flange 67 and an outer flange 69 to which the inner frame member 62 and the outer frame member 64 may be secured, respectively. As discussed in detail below, the nozzle exit orifices 42 are configured to interlock, thereby supporting the gas discharge annulus 65 in the circumferential direction.

In the present embodiment, each nozzle 40 converges in a cross-sectional area perpendicular to the flow of exhaust products 54 from a nozzle inlet 68, coupled to the PDT 36, to the nozzle exit orifice 42. The convergence in cross-sectional area maintains the choked flow condition of the PDT exhaust products 54 through the nozzle 40. In addition, each nozzle 40 may converge in cross-sectional area from the nozzle inlet 68 to a throat, and diverge in cross-sectional area from the throat to the nozzle exit orifice 42. Furthermore, the nozzle 40 transitions from a substantially round shape at the nozzle inlet 68 to a shape corresponding to a turbine inlet at the nozzle exit orifice 42. In the present configuration, the shape of the nozzle exit orifice 42 includes substantially flat circumferential sides. As will be appreciated, flow through a nozzle that transitions to a non-circular shape creates stress concentrations within surfaces having a small radius of curvature. Because the present nozzle exit orifice 42 includes substantially flat circumferential sides, regions adjacent to the four corners of the orifice 42 may experience greater stress than the remaining structure. Consequently, the nozzle exit orifices 42 are assembled into the gas discharge annulus 65 to facilitate distribution of individual nozzle loads across the combined gas discharge annulus structure. Such a configuration enables the nozzles 40 to be constructed from thinner and/or lighter materials compared to configurations in which the nozzle exit offices 42 are not supported by a combined structure.

Specifically, in one embodiment each nozzle exit orifice 42 includes a protruding beveled edge 70 on a first mating surface and a receding beveled edge 72 on a second mating surface. The protruding beveled edge 70 and receding beveled edge 72 are complementary such that the protruding beveled edge 70 of one nozzle exit orifice 42 interlocks with the receding beveled edge 72 of an adjacent nozzle exit orifice 42. In the present configuration, an intersection between the protruding beveled edge 70 and receding beveled edge 72 extends along the radial axis 58 from the inner flange 67 to the outer flange 69. As will be appreciated, because nozzles 40 include protruding edges 70 and receding edges 72 having the same geometric configuration, the nozzles 40 are interchangeable. In this configuration, a single nozzle design may be employed for each nozzle 40 of the PDC 16, thereby reducing engineering, construction and/or maintenance costs. In addition, mating of the protruding beveled edge 70 with the receding beveled edge 72 substantially blocks exhaust products 54 from flowing between nozzle exit orifices 42, thereby sealing the gas discharge annulus 65 to the turbine 18.

Although the present embodiment includes complementary beveled edges as the interlocking feature, the present technique is not limited to such a design. Alternative configurations may employ tessellating mating surfaces other than beveled edges and/or edges that do not lie along radial lines. It will be appreciated that the orientation and configuration of the components employed are a function of the design and operational requirements of the particular application. Those of ordinary skill in the art are capable of determining and implementing the optimal configuration, taking into account the necessary parameters and design criteria. The nozzle geometry facilitates linkage of an angled tube PDC 16 to a traditional turbine 18 by providing mutual support to the nozzles 40 and creating a surface to which the turbine 18 may be mounted.

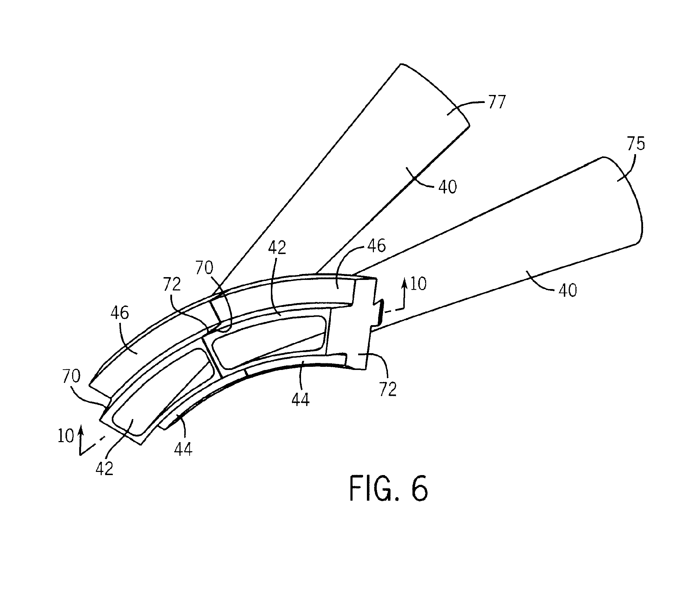

FIG. 6 is a perspective view of two adjacent nozzles 40 of the exemplary nozzle assembly of FIG. 5. As illustrated, each nozzle exit orifice 42 includes substantially flat circumferential sides. The interlocking features of the nozzle exit orifices 42 are depicted at the interface between the two nozzles 40. Specifically, the protruding edge 70 of a first nozzle 75 mates with the receding edge 72 of a second nozzle 77. As will be described in greater detail below, heat from the detonation process results in thermal expansion of the PDTs 36. The gas discharge annulus 65 formed by the interlocking nozzle exit orifices 42 both provides circumferential support for each orifice 42, and facilitates independent thermal expansion of the nozzles 40 and PDTs 36. Specifically, because the nozzle exit orifices 42 are secured to the inner frame member 62 by the flange segments 44, and the outer frame member 64 by the flange segments 46, the nozzles 40 and the PDTs 36 may expand during operation without varying the position of the nozzle exit orifices 42 with respect to the turbine 18.

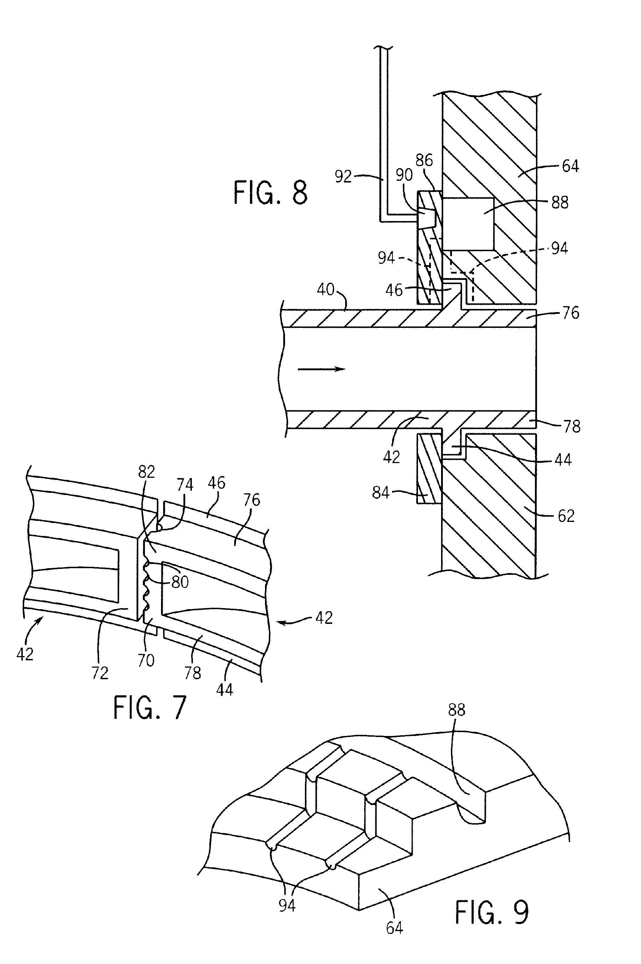

FIG. 7 is a perspective view of adjacent nozzle exit orifices 42, illustrating an inter-nozzle cooling configuration. As previously described, the pulse detonation process generates high temperature exhaust products 54 that pass through the nozzle exit orifices 42, thereby exposing the nozzle exit orifices 42 to high thermal loads.
Consequently, the present embodiment includes a system configured to provide cooling to the individual nozzle exit orifices 42. A cooling manifold, such as the illustrated radial cooling manifold 74, is positioned along the protruding edge 70 of the nozzle exit orifice 42. The radial cooling manifold 74 extends radially through the protruding edge 70 from an outer circumferential surface 76 to an inner circumferential surface 78. One or more cooling slots, such as the illustrated axial cooling slots 80, are positioned along the protruding edge 70, extending from a downstream surface 82 of the nozzle exit orifice 42 to the radial cooling manifold 74.
As will be appreciated, alternative embodiments may include cooling slots angled with respect to the axial direction. In operation, cooling air, from the compressor 22 or an alternate air source (e.g., external compressor, air blower, etc.), may be introduced to the radial cooling manifold 74 through the inner frame member 62 and/or the outer frame member 64. The cooling air then flows radially to axial cooling slots 80, and then axially along the protruding edge 70 through the axial cooling slots 80. The air flow may serve to absorb heat from the inter-nozzle area, thereby cooling the nozzle exit orifices 42.

Further embodiments may employ structures such as vanes or baffles to increase the heat transfer characteristics. In alternative embodiments, the radial cooling manifold and/or axial cooling slots may be positioned along the receding edge 72. A further embodiment may locate the radial cooling manifold and/or axial cooling slots in both the protruding edge 70 and receding edge 72 such that, when assembled, the receding and protruding edges form a combined cooling manifold and combined cooling slots. Alternative cooling fluids (e.g., water, nitrogen, etc.) may be utilized instead of air in further embodiments.

FIG. 8, a cross-sectional side view of a nozzle 40, and FIG. 9, a partial perspective view of the outer frame member 64, illustrate a circumferential nozzle cooling configuration for both the outer and inner circumferential surfaces 76 and 78. As illustrated, the nozzle 40 is secured at its inner flanged segment 44 to the inner frame member 62 by an inner support member 84. In addition, the nozzle 40 is secured at its outer flanged segment 46 to the outer frame member 64 by an outer support member 86. A circumferential cooling manifold 88 extends circumferentially through the outer frame member 64. At one or more points along the circumferential cooling manifold 88, cooling air is provided by a cooling air inlet port 90 though the outer support member 86. The cooling air inlet port 90 may contain internal threads such that a cooling air supply 92, including corresponding external threads, may be coupled to the inlet port 90. Alternatively, the cooling air supply 92 may be secured to the inlet port 90 by other suitable means of attachment (e.g., bolts, clamps, etc.). One or more cooling slots, such as the illustrated radial cooling slots 94, extend from the circumferential cooling manifold 88 to the nozzle exit orifice 42 through both the outer support member 86 and the outer frame member 64 at regular intervals around the entire circumference of the cooling manifold 88. As will be appreciated, alternative embodiments may include cooling slots angled with respect to the radial direction.

In operation, cooling air from the inlet port 90 enters the circumferential cooling manifold 88 and flows through the manifold 88 to the radial cooling slots 94. The cooling air then flows through the slots 94 and impinges upon the outer circumferential surface 76 of the nozzle exit orifice 42. As the cooling air flows along the outer circumferential surface 76 in the axial direction, heat from the exhaust products is absorbed by the air, thereby cooling the nozzle exit orifice 42. Like the inter-nozzle cooling configuration, alternate embodiments may employ certain structures to enhance heat transfer between the cooling air and the outer circumferential surface 76, such as fms, vanes, or baffles. Further embodiments may utilize a cooling medium other than air, such as water, nitrogen, or carbon dioxide. In addition, a similar configuration may be employed to cool the inner circumferential surface 78. Such a configuration may include an inner circumferential cooling manifold and one or more cooling slots extending outward to the nozzle exit orifice 42. Employing a combination of the inter-nozzle and circumferential cooling configurations provides cooling along each edge of the nozzle exit orifice 42 (i.e., the inner circumferential surface 78, the outer circumferential surface 76, the protruding edge 70, and the receding edge 72), thereby insulating the nozzle exit orifices 42 from high temperature exhaust products 54 and limiting thermal stress within the nozzle 40.

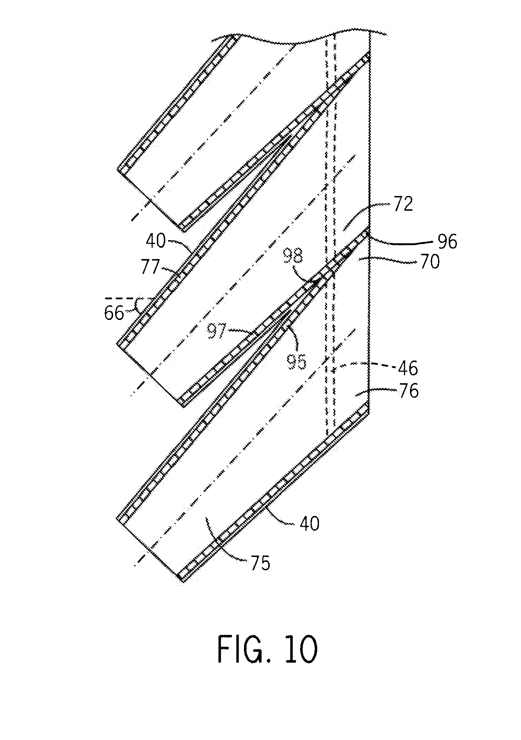

FIG. 10 is a sectional view of adjoining nozzles 40, taken along line 10-10 of FIG. 6, having common surfaces at the exit orifices. As will be appreciated, reducing the separation distance between nozzle exit orifices 42 enhances flow continuity into the turbine 18, thereby increasing efficiency of the turbine system 10. Consequently, a contemplated embodiment employs a shared inter-nozzle surface 96 to decrease the distance between nozzle exit orifices 42. As illustrated, an external surface 95 of the first nozzle 75 sits flush against an external surface 97 of the second nozzle 77 at a nozzle intersection 98. The outer flange segment 46 and the outer circumferential surface 76 of the first nozzle 75 extend beyond the nozzle intersection 98. Flow of exhaust products 54 along the protruding edge 70 of the first nozzle 75 is defined by the receding edge 72 of the second nozzle 77. In this configuration, the flow of exhaust products 54 within adjacent nozzles 40 is separated by only a single surface 96 at the nozzle exit orifices 42. This configuration substantially reduces the inter-nozzle separation distance, thereby facilitating rapid convergence of exhaust products 54 from adjacent nozzles 40 and establishing a substantially continuous flow of exhaust gas into the turbine 18.

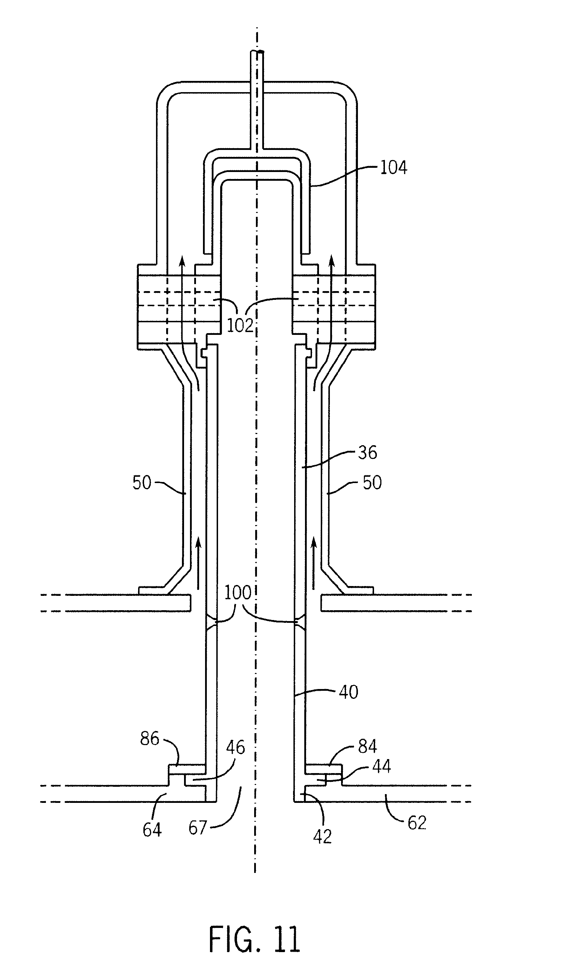

FIG. 11 is a cross-sectional view of a pulse detonation tube and nozzle assembly having thermal expansion joints configured to enable the pulse detonation tube to thermally expand during operation. As previously discussed, the PDT 36 may be coupled to the nozzle 40 using a variety of techniques. As illustrated, the PDT 36 and nozzle 40 are attached via a welded joint 100. As will be appreciated, the detonation process generates heat that may induce significant thermal expansion of the PDTs 36. For example, a 40 inch (102 cm) long PDT may increase in length by as much as 0.75 inches (2 cm). As illustrated, the nozzle exit orifice 42 is secured to the inner frame member 62 by the inner flange segment 44, which is sandwiched between the inner frame member 62 and the inner support member 84. Similarly, the outer flange segment 46 is sandwiched between the outer frame member 64 and the outer support member 86, thereby securing the nozzle exit orifice 42 to the outer frame member 64. Because the inner frame member 62 and the outer frame member 64 are secured to the turbine 18, the position of the nozzle exit orifice 42 is fixed with respect to the turbine 18. This configuration maintains the orientation of exhaust flow into the turbine 18 despite thermal growth of the nozzle 42 and/or the PDT 36. Furthermore, expansion joints 102 facilitate thermal growth of the PDT 36 while maintaining a position of a tube head end 104 with respect to the casing 50. This configuration enables individual PDTs 36 to expand independently of the other PDTs 36.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

For completeness, various aspects of the invention are now set out in the following numbered clauses:
1. A pulse detonation combustor, comprising:
   a gas discharge annulus comprising a plurality of nozzles engaged with one another via mating surfaces to support the gas discharge annulus in a circumferential direction; and
   a plurality of pulse detonation tubes extending to the plurality of nozzles.
2. The pulse detonation combustor of clause 1, wherein each pulse detonation tube extends to a respective nozzle.
3. The pulse detonation combustor of clause 1, wherein each pulse detonation tube comprises an expansion joint configured to facilitate independent thermal growth of each pulse detonation tube.
4. The pulse detonation combustor of clause 1, wherein each nozzle is oriented substantially tangent to the gas discharge annulus.
5. The pulse detonation combustor of clause 1, wherein each nozzle is oriented at an angle relative to a pulse detonation combustor longitudinal centerline corresponding to a turbine entrance angle.
6. The pulse detonation combustor of clause 1, wherein each nozzle is oriented at an angle of approximately between 60 to 80 degrees relative to a pulse detonation combustor longitudinal centerline.
7. The pulse detonation combustor of clause 1, wherein at least one mating surface of each nozzle comprises one or more cooling slots in fluid communication with a cooling manifold.
8. The pulse detonation combustor of clause 1, wherein each nozzle comprises an exit orifice having substantially flat circumferential sides.
9. The pulse detonation combustor of clause 1, wherein each exit orifice shares a common surface with an adjacent exit orifice.
10. A turbine system, comprising:
   a pulse detonation combustor, comprising:
      a plurality of nozzles each having a nozzle exit orifice and a nozzle inlet, wherein the plurality of nozzle exit orifices engage with one another via mating surfaces to form a gas discharge annulus;
      a plurality of pulse detonation tubes each coupled to a respective nozzle inlet; and
      a turbine rotor configured to receive a flow of exhaust gas from the gas discharge annulus.
11. The turbine system of clause 10, wherein the mating surfaces comprise complementary beveled edges.
12. The turbine system of clause 10, wherein each pulse detonation tube is coupled to the respective nozzle inlet by a welded connection.
13. The turbine system of clause 10, wherein each nozzle converges in a cross-sectional area perpendicular to a direction of gas flow through the nozzle from the nozzle inlet to the nozzle exit orifice.
14. The turbine system of clause 13, wherein a ratio of convergence is selected to maintain a choked flow from the nozzle inlet to the nozzle exit orifice.
15. The turbine system of clause 10, wherein each nozzle converges in a cross-sectional area perpendicular to a direction of gas flow through the nozzle from the nozzle inlet to a throat, and diverges in the cross-sectional area perpendicular to the direction of gas flow through the nozzle from the throat to the nozzle exit orifice.
16. The turbine system of clause 10, wherein each nozzle exit orifice comprises an inner circumferential flange segment and an outer circumferential flange segment, the inner circumferential flange segments forming an inner circumferential flange configured to mount to an inner frame member, and the outer circumferential flange segments forming an outer circumferential flange configured to mount to an outer frame member.
17. The turbine system of clause 16, wherein the inner frame member, the outer frame member, or a combination thereof, comprises a circumferential cooling manifold and one or more cooling slots extending from the circumferential cooling manifold toward the gas discharge annulus.
18. The turbine system of clause 16, wherein the turbine is coupled to the inner frame member and the outer frame member, and wherein each nozzle exit orifice is positioned adjacent to a turbine rotor inlet.
19. An inter-nozzle cooling system, comprising:
   a plurality of nozzle exit orifices engaged with one another via mating surfaces to form a gas discharge annulus of a pulse detonation combustor, wherein at least one mating surface of each nozzle exit orifice comprises one or more cooling slots in fluid communication with a cooling manifold.
20. The system of clause 19, wherein the cooling slots extend from the cooling manifold to a downstream surface of each nozzle exit orifice.
21. The system of clause 19, wherein adjacent mating surfaces each include complementary cooling slots.
22. A circumferential cooling system, comprising:
   a plurality of nozzle exit orifices engaged with one another via mating surfaces to form a gas discharge annulus of a pulse detonation combustor; and
   a frame coupled to the gas discharge annulus, wherein the frame comprises a circumferential cooling manifold and one or more cooling slots extending from the circumferential cooling manifold toward the gas discharge annulus.
23. The system of clause 22, wherein the frame is disposed adjacent to an outer circumferential surface of the gas discharge annulus, and the cooling slots are configured to cool the outer circumferential surface of the gas discharge annulus.
24. The system of clause 22, wherein the frame is disposed adjacent to an inner circumferential surface of the gas discharge annulus, and the cooling slots are configured to cool the inner circumferential surface of the gas discharge annulus.
25. The system of clause 22, comprising a support member configured to couple the frame to the gas discharge annulus, wherein the support member comprises one or more cooling slots extending from the circumferential cooling manifold toward the gas discharge annulus.

## Claims

1. A pulse detonation combustor (16), comprising:
a gas discharge annulus (65) comprising a plurality of nozzles (40) engaged with one another via mating surfaces to support the gas discharge annulus (65) in a circumferential direction; and
a plurality of pulse detonation tubes (36) extending to the plurality of nozzles (40).

2. The pulse detonation combustor (16) of claim 1**,** wherein each pulse detonation tube (36) extends to a respective nozzle (40).

3. The pulse detonation combustor (16) of claim 1, wherein each pulse detonation tube (36) comprises an expansion joint (102) configured to facilitate independent thermal growth of each pulse detonation tube (36).

4. The pulse detonation combustor of any of the preceding claims, wherein each nozzle is oriented substantially tangent to the gas discharge annulus.

5. The pulse detonation combustor of any of the preceding claims, wherein each nozzle is oriented at an angle relative to a pulse detonation combustor longitudinal centerline corresponding to a turbine entrance angle.

6. The pulse detonation combustor (16) of claim 5, wherein each nozzle (40) is oriented at an angle (66) of approximately between 60 to 80 degrees relative to a pulse detonation combustor longitudinal centerline (38).

7. The pulse detonation combustor (16) of any of the preceding claims, wherein at least one mating surface of each nozzle (40) comprises one or more cooling slots (80) in fluid communication with a cooling manifold (74).

8. The pulse detonation combustor of any of the preceding claims, wherein each nozzle comprises an exit orifice having substantially flat circumferential sides.

9. The pulse detonation combustor of any of the preceding claims, wherein each exit orifice shares a common surface with an adjacent exit orifice.

10. A turbine system (10), comprising:
a pulse detonation combustor (16), comprising:
a plurality of nozzles (40) each having a nozzle exit orifice (42) and a nozzle inlet (68), wherein the plurality of nozzle exit orifices (42) engage with one another via mating surfaces to form a gas discharge annulus (65);
a plurality of pulse detonation tubes (36) each coupled to a respective nozzle inlet (68); and
a turbine rotor (55) configured to receive a flow of exhaust gas (54) from the gas discharge annulus (65).

11. The turbine system (10) of claim 10, wherein the mating surfaces comprise complementary beveled edges (70, 72).

12. The turbine system of claim 10 or 11, wherein each pulse detonation tube is coupled to the respective nozzle inlet by a welded connection.

13. The turbine system (10) of claim 6, wherein each nozzle exit orifice (42) comprises an inner circumferential flange segment (44) and an outer circumferential flange segment (46), the inner circumferential flange segments (44) forming an inner circumferential flange (67) configured to mount to an inner frame member (62), and the outer circumferential flange segments (46) forming an outer circumferential flange (69) configured to mount to an outer frame member (64).

14. The turbine system (10) of claim 8, wherein the inner frame member (62), the outer frame member (64), or a combination thereof, comprises a circumferential cooling manifold (88) and one or more cooling slots (94) extending from the circumferential cooling manifold (88) toward the gas discharge annulus (65).

15. The turbine system (10) of claim 8, wherein the turbine is coupled to the inner frame member (62) and the outer frame member (64), and wherein each nozzle exit orifice (42) is positioned adjacent to a turbine rotor inlet.
